# EUROPEAN PATENT APPLICATION

(11) **EP 1 854 680 A2**
(43) Date of publication of application: **14.11.2007**
(21) Application number: 07466010.1
(22) Date of filing: 04.05.2007
(51) Int. Cl.: B60R 21/26

(54) **Compact gas generator for electric pyrotechnic systems and a method of producing it**

(30) Priority: 09.05.2006 CZ 20060295
(71) Applicant: Indet Safety Systems a.s., 75501 Vsetín (CZ)
(72) Inventor: Cedidla, Zdenek, 75601 Seninka (CZ); Jakubko, Jan, 75501 Vsetin (CZ); Nemcak, Ondrej, 75501 Vsetin (CZ); Zahradnicek, Martin, 75605 Karolinka (CZ)
(74) Representative: Kreizlova, Dana

(57) **Abstract**

The compact gas generator for electrically initiated pyrotechnic systems comprises a carrying sleeve (1), in which contacts (2) pass through an insulation and sealing mass (3) and enter subsequently the electric initiator (4) covered with an inner cover (5), with all parts mentioned till now forming together the assembled carrier (6), on which an outer cover (7) is placed from above. The inner cover contains with advantage an enhancing flash composition (8). Between the carrying sleeve (1) and the contacts (2) a sealing sleeve (9) can be inserted. The outer cover contains with advantage a propellant (10). A material of the inner cover (5) and the outer cover (7) is most frequently a metal or a plastic. The method of producing the compact gas generator according to the present invention consists in fixing the contacts (2) in the insulation and sealing mass (3), subsequently creating the electric initiator (4) on the contacts (2) or connecting it with them. The electric initiator (4) is then covered with the inner cover (5) and the carrier (6) assembled in this manner is covered with the outer cover (7) from above, with which it is hermetically joined in the place of the carrying sleeve (1). The connection of the outer cover (7) with the carrying sleeve (1) is achieved with advantage by laser welding.

## Description

### Field of invention

This invention relates to a compact type of an electrically initiated gas generator intended for electric pyrotechnic systems. The gas generator is particularly suitable as an element of safety systems for pre-tensioners of safety seat belts in automobiles but also for other related applications. Further, the invention concerns also a method of manufacturing the compact gas generator.

### Description of the prior art

As it is known in the given field, pyrotechnic components for electrically initiated pyrotechnic systems intended for the automotive industry are generally based on the known design of what is known as a GTMS (glass to metal sealed) squib, in which a high degree of protection against humidity is achieved by combining a laser weld of metals (metal carrier with a metal cup) and sealing the metals with a glass seal (placing contacts into the metal carrier). These initiators are used extensively mainly thanks to their high resistance to humidity and also for their high level of safe current (0.4 A/10 s). Their disadvantage is, on the other hand, high price.

Besides these resistant and very costly pyrotechnic components also cheaper solutions, known as, for instance, plastics squibs, are employed for electric initiators in automobiles. However, the plastic squibs provide a lower level of air-tightness and also less body resistance to back pressure. Also, the level of the safe current is usually lower than that of the GTMS squibs (typically 0.2 A to 0.25 A for a period of 10 s.).

The gas generators used in electric pyrotechnic systems till now exhibit - in comparison with the present requirements - a lower environmental resistance (high humidity, etc.) and also a relatively complicated structure and require use of expensive initiators (GTMS squib, plastics squib, etc.). In contrast to the solutions used up to now, the present invention featuring a compact design aims at achieving a markedly higher air-tightness and humidity resistance while reducing simultaneously the product price.

### Nature of the invention

The above disadvantages and shortcomings of the pyrotechnic systems known till now are to a great extent eliminated by the compact gas generators for electric pyrotechnic systems according to this invention and by the method of producing it. The nature of the invention can be described as follows: the compact gas generator comprises a carrying sleeve, in which contacts pass through an insulation and a sealing mass and enter the electric initiator enclosed in an inner cover, with all the parts described up to now forming together an assembled carrier on which an outer cover is placed from above. The joint of the assembled carrier with the outer cover is formed with advantage with a laser weld. The inner cover may contain an enhancing flash composition. In the preferred embodiment, a sealing sleeve is inserted between the carrying sleeve and the contact. The outer cover may contain a propellant and the material of both the outer and inner covers is most frequently a metal or a plastic.

Further, the nature of the invention is a method of manufacturing the compact gas generator for electric pyrotechnic systems consisting in fixing the contacts in the insulation and sealing material, subsequently creating an electric initiator on the contacts, encasing the said initiator in the inner cover and covering the assembled carrier from above with the outer cover, with which it is connected hermetically in the place of the carrying sleeve. The connection with the carrying sleeve is obtained with advantage by laser welding.

An advantage of the compact gas generator according to the invention, contrary to the comparable solutions employed till now, is the use of a compact design resulting in a markedly higher air-tightness and humidity resistance while reducing the price of the gas generator.

The compact design of the gas generator according to this invention is achieved with advantage by sealing hermetically through a laser weld the outer cover with the carrying sleeve and also by using an insulation and sealing mass between contacts and the carrying sleeve, the effect of the insulation and sealing mass being increased with advantage by utilizing a sealing sleeve. A cheap and hermetically untight type of an electric initiator (an electric pill or a detonator /a fuse/) is fixed onto the contacts using a conducting connection. The insulation and sealing mass forms a support bed for this electric initiator and also for the enhancing flash composition, which is placed with advantage in the inner cover.

An alternative method of producing the compact gas generator according to the present invention consists in welding the electric initiator with the contacts located in a preformed bed made from the sealing and insulation mass, assembling it with the inner cover and the enhancing flash composition and finally providing the assembled carrier with the outer cover filled with the propellant and welding the carrier and the outer cover together with laser.

The enhancing flash composition is dosed using methods well known in the given field (in bulk, pressed, dropped on, rubbed into and other forms) and covered with, for instance, an aluminium fringed inner cover with a pre-shaped bottom for an easier opening during the product operation. The unit described above is called, as already mentioned, the assembled carrier. The compact gas generator is then produced by joining the assembled carrier, for instance by laser welding, with the aluminium outer cover containing with advantage a propellant. By the propellant a pyrotechnic gas releasing composition, green propellant or nitrocellulose and other smokeless powders are understood.

### Brief description of the drawings

Specific embodiments of the compact gas generators according to the present invention are shown in the attached drawings, of which:
- Figure 1 shows a compact gas generators according to example 1 - axial sectional view,
- Figure 2 shows a compact gas generators according to example 2 - axial sectional view,
- Figure 3 shows a compact gas generators according to example 3 - axial sectional view.

### Exemplary embodiment of the invention

To describe the nature of the invention in a greater detail the following examples of a specific embodiment of the compact pyrotechnic gas generator with an increased resistance and the method of producing it are provided.

### Example 1

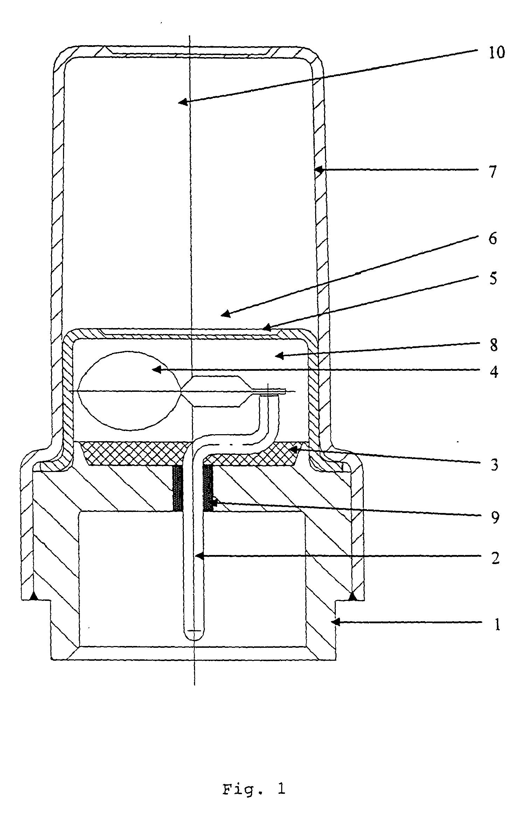

An LF5 pyrotechnic ignition pill based on a mixture of fuels of aluminium + zirconium and potassium perchlorate and of alkaline cupric nitrate oxidizers forming the electric initiator 4 provided with ethyl cellulose and silicone lacquer was joined conductively by welding with the contacts 2, which were insulated in advance in the insulation and sealing mass 3 based on polyphenylene sulphide (PPS) and also in the sealing sleeve 9 based on epoxy resin. 100 mg of 75/25 potassium nitrate/boron mixture was used as an enhancing flash composition 8. This mixture was placed in the inner cover 5 comprising an aluminium cup having a wall thickness of 0.4 mm and depth of the pre-shaped bottom of 0,25 mm, the pre-shaping of the bottom being achieved by reducing its thickness. The whole created in this manner formed the assembled carrier 6, which in the place of the carrying sleeve 1 was laser welded with the outer cover 7 comprising the aluminium cup with the wall thickness of 0.4 mm containing the propellant 10 - in this case 1200 mg of one-component nitrocellulose smokeless gun powder. This gas generator is illustrated in Figure 1.

### Example 2

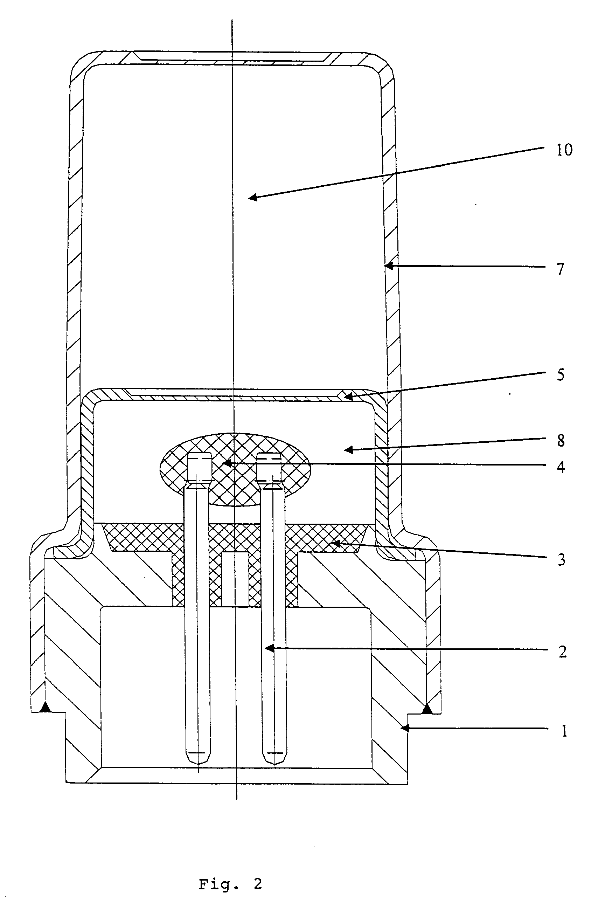

An LF5 pyrotechnic pill based on a mixture of fuels of aluminium + zirconium and potassium perchlorate and of alkaline cupric nitrate oxidizers forming the electric initiator 4 coated with ethyl cellulose and silicone lacquer was formed on the contacts 2, which were insulated in advance in the insulation and sealing mass 3 based on epoxy resin. As an enhancing flash composition 8, 120 mg of 75/25 potassium nitrate/boron mixture was used. This mixture was placed in the inner cover 5 comprising an aluminium cup having a wall thickness of 0.4 mm and depth of the pre-shaped bottom of 0,25 mm. The whole created in this manner formed the assembled carrier 6, which in the place of the carrying sleeve 1 was laser welded with the outer cover 7 comprising the aluminium cup with the wall thickness of 0.4 mm containing the propellant 10 - in this case 1400 mg of the "green propellant". The gas generator described above is shown in Figure 2.

### Example 3

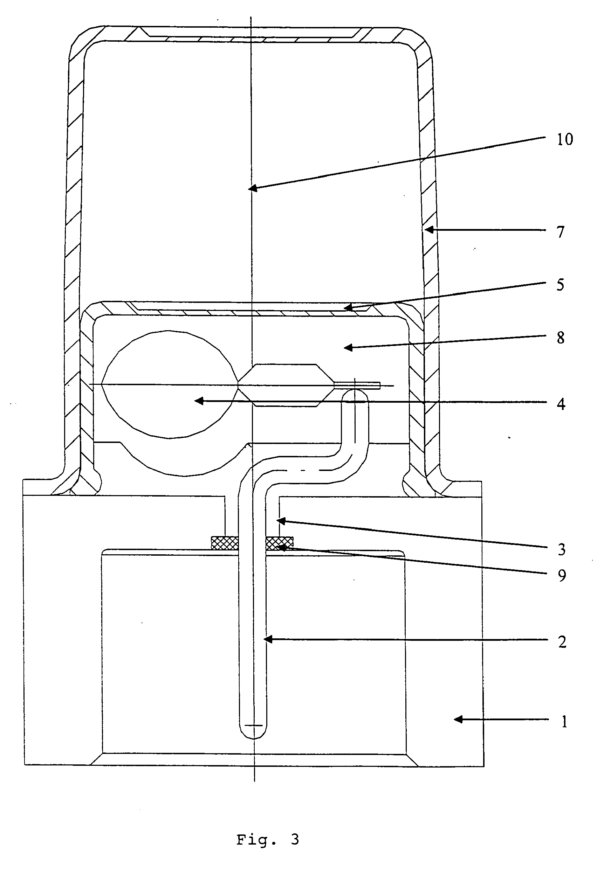

An LF5 pyrotechnic pill based on a mixture of fuels of aluminium + zirconium and potassium perchlorate and of alkaline cupric nitrate oxidizers forming the electric initiator 4 provided with ethyl cellulose and silicone lacquer was joined conductively by welding with the contacts 2, which were insulated in advance in the insulation and sealing mass 3 based on polyphenylene sulphide (PPS) and also in the sealing sleeve 9 based on epoxy resin. 85 mg of 75/25 potassium nitrate/boron mixture was used as an enhancing flash composition 8. This mixture was placed in the inner cover 5 comprising a plastic cup having a wall thickness of 0.4 mm. In the place of the carrying sleeve 1 the assembled carrier 6 was laser welded with the outer cover 7 comprising the aluminium cup with the wall thickness of 0.5 mm containing the propellant 10 - in this case 1200 mg of one-component nitrocellulose smokeless gun powder. Such a gas generator is depicted in Figure 3.

### Industrial application potentials

The compact gas generators according to the present invention including the method of producing them can be used extensively primarily in the automotive industry.

## Claims

1. A compact gas generator for electrically initiated pyrotechnic systems, wherein the said compact gas generator comprises a carrying sleeve (1), in which contacts (2) pass through an insulation and sealing mass (3) and enter an electric initiator (4) encased with an inner cover (5), with all the parts mentioned till now forming together the assembled carrier (6), on which an outer cover (7) is placed from above.

2. A compact gas generator for electrically initiated pyrotechnic systems according to Claim 1, wherein the assembled carrier (6) is joined with the outer cover (7) with a laser weld.

3. A compact gas generator for electrically initiated pyrotechnic systems according to Claim 1, wherein the inner cover (5) contains an enhancing flash composition (8).

4. A compact gas generator for electrically initiated pyrotechnic systems according to Claim 1, wherein a sealing sleeve (9) is inserted between the carrying sleeve (1) and contacts (2).

5. A compact gas generator for electrically initiated pyrotechnic systems according to Claim 1, wherein the outer cover (7) contains a propellant (10).

6. A compact gas generator for electrically initiated pyrotechnic systems according to Claim 1, wherein the material from which the inner cover (5) and outer cover (7) are made is a metal or a plastic.

7. A method of producing a compact gas generator for electrically initiated pyrotechnic systems according to Claim 1, wherein the contacts (2) are fixed in the insulation and sealing mass (3), subsequently an electric initiator (4) is created on or connected with the contacts (2) and covered with the inner cover (5) and the carrier (6) thus assembled is covered from above with the outer cover (7), with which it is hermetically connected in the place of the carrying sleeve (1).

8. A method of producing a compact gas generator for electrically initiated pyrotechnic systems according to Claim 7, wherein the connection of the outer cover (7) with the carrying sleeve (1) is achieved by laser welding.

9. A method of producing a compact gas generator for electrically initiated pyrotechnic systems according to Claim 7, wherein the enhancing flash composition (8) is placed into the space of the inner cover (5).

10. A method of producing a compact gas generator for electrically initiated pyrotechnic systems according to Claim 7, wherein the propellant (10) is placed into the space of the outer cover (7).
